# EUROPEAN PATENT SPECIFICATION

(11) **EP 2 137 863 B1**
(45) Date of publication and mention of the grant of the patent: **21.10.2015**
(21) Application number: 07794185.4
(22) Date of filing: 23.08.2007
(51) Int. Cl.: H04L 1/16, H04L 1/00, H04L 5/00

(54) **MULTIPLE PACKET SOURCE ACKNOWLEDGEMENT**
MEHRFACH-PAKETQUELLENBESTÄTIGUNG
RECONNAISSANCE D'UNE SOURCE DE PAQUETS MULTIPLES

(30) Priority: 17.04.2007 US 736030
(43) Date of publication of application: 30.12.2009
(73) Proprietor: Telefonaktiebolaget LM Ericsson (publ), 164 83 Stockholm (SE)
(72) Inventor: DENT, Paul, W., Pittsboro, NC 27312 (US)
(74) Representative: Hoffmann Eitle
(86) International application number: PCT/SE2007/050575
(87) International publication number: WO 2008/127164

(56) References cited:
- EP-A1- 1 626 520
- EP-A1- 1 626 520
- EP-A2- 0 981 221
- EP-A2- 0 981 221
- WO-A1-2006/118432
- US-A1- 2005 180 325

## Description

### TECHNICAL FIELD

The present invention pertains to telecommunications, and particularly to one or more of: method and apparatus for preparation of a data packet for facilitating error checking; method and apparatus for error checking of a data packet; and method and apparatus for generation and interpretation of an acknowledgement indicating reception of a data packet. The present invention is particularly but not exclusively applicable to the field of packet data transmission in cellular systems wherein data packets are sent from multiple transmitters to a base station receiver, and a base station transmitter associated with the base station receives transmits acknowledgements of receipt.

### BACKGROUND

Packet data systems of the prior art may use acknowledgement of correctly received packets to indicate to a sender that it is not necessary to retransmit the packets. Otherwise, unacknowledged packets will be retransmitted by the sender. Many prior art acknowledgment methods are known; for example, packet-by-packet acknowledgment may be used. Alternatively, if the loop delay of the communications channel is long, a group of packets may be sent and then an acknowledgment sent indicating which packets were received correctly and which packets were not received correctly. For the latter, one bit per packet suffices. In the prior art, such acknowledgements are addressed to the sender of the packets, so that each sender receives its own acknowledgment message.

Acknowledgements to different senders could be time-multiplexed on an acknowledgment channel, but in the prior art each acknowledgment included an identification of the corresponding sender. When a thirty two-bit sender ID is required to identify the sender, but the sender sent only one packet, these prior art methods are clearly not bit-efficient. Single packet uplink messages can often arise when the telecommunications services is for example mobile web-browsing, and the uplink messages are generated in response to the users mouse clicks. Thus in the case of long loop delay where many messages are only one packet long, or a small number of packets, the above-described prior-art acknowledgment methods are inefficient. Therefore there is a need for an improved acknowledgment method.

Document EP 0 981 221 A2 relates to a code division multiple access communication system in which acknowledgement information is collectively put in a transmission frame. Each mobile station transmits a frame spread using a spreading code assigned to plural mobile stations over a common control channel commonly used by the plural mobile stations and the base stations. Furthermore, the base station performs a CRC check and the like on the basis of a signal received from the mobile stations.

### SUMMARY

The above-mentioned need is accomplished by the subject-matter of the independent claims. The dependent claims describe advantageous embodiments.

In one of its aspects, the technology pertains to a multi-bit acknowledgement word prepared by a first communications station (such as a base station, for example) for separately acknowledging the success or failure of data packets received over plural communication channels from respective plural second communication stations (such as wireless terminals, for example). The acknowledgement word is a "joint" or "common" acknowledgement word in the sense that one and the same acknowledgement word provides acknowledgement information for data packets received from plural second communication stations. Yet the joint acknowledgement word separately designates whether each data packet was received successfully or not since different bits of the joint acknowledgement word are respectively associated with the different channels assigned to the respective second communication stations.

An example method of the technology concerns acknowledging data packets received by the first communication station from the plural second communication stations. The method comprises the first communication station informing the second communication stations of respective channel assignments for the second communication stations. The second communication stations use their respectively assigned channels for transmitting data packets to the first communication station. A packet error check is performed at the first communication station for each data packet. In accordance with a result of each packet error check, an associated bit of a multi-bit acknowledgement word is set for each received data packet whereby the acknowledgement word has respective bits set for plural ones of the second communication stations. The acknowledgement word is then transmitted from the first communication station to the plural second communication stations.

In an example implementation of the acknowledgement method, the bit set in accordance with the result of the packet error check can be associated with a particular channel and packet position on the channel.

In another example implementation of the acknowledgement method, the act of performing the packet error check for a received packet at the first communication station can comprise using an identifier of the second communication station that was assigned the channel on which the packet was received. For example, the act of using the identifier of the second communication station that was assigned the channel on which the packet was received can comprise appending the identifier of the second communication station to data bits of the received packet, and then determining acyclic redundancy check code over the identifier and the data bits of the received packet.

In another example implementation of the acknowledgement method, the act of transmitting the acknowledgement word from the first communication station to the plural second communication stations can comprise transmitting a first portion of the acknowledgement word but only transmitting a second portion of the acknowledgement word if configuration of the channel assignments requires transmission of the second portion of the acknowledgement word.

In another example implementation, the acknowledgement method further comprises choosing an association of the bits of the acknowledgement word to packet positions in the channels such that the total required acknowledgement word length is minimized for the most probable configuration of channel assignments.

In another example implementation, the acknowledgement method further comprises using a compression algorithm to reduce a number of bits of the acknowledgement word.

In another example implementation, the acknowledgement method further comprises using an error correction coding for protecting the acknowledgement word

In another example implementation, the acknowledgement method further comprises receiving the acknowledgement word at an at least one of the second communication stations. Such implementation can further comprise, at the at least one of the second communication stations, examining a bit(s) of the acknowledgement word corresponding to the respectively assigned channel to determine success or failure of the first communication station to receive a data packet transmitted by the at least one of the second communication stations to the first communication station.

In another of its aspects, the technology concerns a communication station capable of preparing a joint acknowledgement word as described above. For example, in an example embodiment, a communication station (which can be a base station, for example) comprises a channel assignment manager configured to assign respective communication channels to each of plural terminals. The communication station further comprises a transceiver configured to transmit channel assignments to the plural terminals and to receive data packets from the plural terminals on the respective communication channels. The communication station further comprises a packet error checker configured to perform a packet error check for the data packets received from the plural terminals, as well as an acknowledgement unit. The acknowledgement unit is configured to prepare a multi-bit acknowledgement word in accordance with results of the packet error check. In particular, for each received data packet the acknowledgement unit is configured to set an associated bit of the acknowledgement word whereby the acknowledgement word has respective bits set for plural ones of the terminals. The transceiver is further configured to transmit the acknowledgement word to the plural terminals.

In an example implementation of such a joint-acknowledgement word preparing communication station, the acknowledgement unit is configured to set the associated bit in association with a particular channel and packet position on the channel.

In another example implementation of a joint-acknowledgement word preparing communication station, the packet error checker, in performing the packet error check, can be configured to use an identifier of the terminal that was assigned the channel on which the packet was received. For example, the packet error checker, in performing the packet error check, can be configured to append the identifier of the terminal to data bits of the received packet and to determine acyclic redundancy check code over the identifier and the data bits of the received packet.

Another example implementation of a joint-acknowledgement word preparing communication station further comprises a compressor configured to reduce a number of bits of the acknowledgement word.

Another example implementation of a joint-acknowledgement word preparing communication station further comprises an error correction unit configured to code the acknowledgement word

In another of its aspects, the technology concerns a communications terminal configured to utilize the joint acknowledgement word. For example, an example embodiment of a communications terminal comprises a transceiver configured to transmit a data packet on an assigned channel to a communication station and to receive the multi-bit acknowledgement word from the communication station. The acknowledgement word includes at least one bit set for indicating success or failure of the communication station to receive the data packet from the communications terminal and other bits set for at least one other communications terminal. The terminal further comprises an acknowledgement word checker configured to determine, in accordance with the channel assigned to the communications terminal, which bit of the acknowledgement word to examine as the at least one bit and further configured to examine the at least one bit to determine the success or the failure of the communication station to receive the data packet.

In an example implementation, the terminal can further comprise a packet preparer configured to form the data packet by appending a terminal checking code to data bits of the data packet. The terminal checking code comprises a cyclic redundancy check code formed over the data bits of the data packet and a terminal identifier.

In an example implementation, upon the acknowledgement word checker of the terminal determining the failure of the communication station to receive the data packet, the transceiver is further configured to retransmit the data packet when a suitable opportunity arises. For example, the transceiver can be configured to retransmit the data packet upon receiving a request for retransmission from the communications station. Alternatively or additionally, the transceiver can be configured to retransmit the data packet upon receiving a new channel assignment from the communications station.

Another example method of the technology concerns error checking of data packets received by the first communication station from the plural second communication stations. The error checking method first comprises the first communication station informing the second communication stations of respective channel assignments for the second communication stations. The method further comprises the at least one of the second communication stations forming a data packet by appending a terminal checking code to data bits of the data packet. The terminal checking code comprises a cyclic redundancy check code formed over the data bits of the data packet and a terminal identifier of the at least one of the second communication stations. The at least one of the second communication stations then uses its respectively assigned channel for transmitting the data packet to the first communication station. The data packet is received at the first communication station, whereat a packet error check is performed at the first communication station. The packet error check performed for the data packet received from the at least one of the second communication stations uses the terminal identifier.

In an example implementation of the error checking method, the act of performing a packet error check at the first communication station for the data packet received from the at least one of the second communication stations comprises the following acts: (1) determining the channel upon which the data packet was received; (2) fetching an expected terminal identifier corresponding to the channel upon which the data packet was received; (3) determining a cyclic redundancy check code over the data bits of the data packet and the expected terminal identifier; and (4) comparing the cyclic redundancy check code received in the data packet with the cyclic redundancy check code determined using the expected terminal identifier to determine failure or success of reception of the data packet.

In another of its aspects, the technology involves a communication station capable, e.g., of carrying out the error correction method. The communication station comprises a channel assignment manager configured to assign respective communication channels to each of plural terminals and to associate an anticipated terminal identifier to at least one of the communication channels. The communication station further comprising a transceiver configured to transmit channel assignments to the plural terminals and to receive data packets from the plural terminals on the respective communication channels. In addition, the communication station comprises a packet error checker configured to perform a packet error check for a data packet received from at least one of the plural terminals using an anticipated terminal checking code. The anticipated terminal checking code can comprise a cyclic redundancy check code formed over the data bits of the received data packet and the anticipated terminal identifier associated with communication channel on which the data packet is received.

In an example implementation, the packet error checker is further configured to compare the anticipated terminal checking code with an actual terminal checking code, the actual terminal checking code being a cyclic redundancy code received in the received data packet.

In another of its aspects, the technology involves a communication terminal capable, e.g., of facilitating the error correction method. A communications terminal comprises a transceiver configured to transmit a data packet on an assigned channel to a communication station. The communications terminal further comprises a packet preparer configured to form the data packet by appending a terminal checking code to data bits of the data packet. The terminal checking code comprises a cyclic redundancy check code formed over the data bits of the data packet and a terminal identifier of the terminal.

In an example implementation, the terminal can further comprise an acknowledgement word checker configured to determine, in accordance with the channel assigned to the terminal, which bit of a multi-bit acknowledgement word to examine to determine the success or the failure of the communication station to receive the data packet.

In example implementations of any of the foregoing methods and apparatus, the first communication station can be a cellular base station of a cellular network and the second communication stations can be wireless terminals.

In example implementations of any of the foregoing methods and apparatus, the respective channel assignments can comprise an assignment of at least one of: (1) radio channel frequency; (2) a group of one or more timeslots in a time division multiplex frame; (3) a duration of the channel assignment; (4) a number of packets that may be transmitted using the channel assignment; (5) one or more Code Division Multiple Access codes; (6) a modulation and coding scheme to use for transmitting a packet; and/or (7) an assignment of packet size.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1 is a schematic view of a telecommunications system suitable for using a joint acknowledgement word according to an example embodiment and mode.
Fig. 2 is a flowchart showing basic, non-limiting, example steps or acts performed in conjunction with an example method of acknowledging data packets and of constructing a joint acknowledgement word according to an example mode.
Fig. 3 is a flowchart showing basic, example acts performed by a terminal upon receiving a joint acknowledgement word according to an example mode.
Fig. 4 is a schematic view of a telecommunications system suitable for using a terminal checking code according to an example embodiment and mode.
Fig. 5 is a diagrammatic view showing formation of a terminal checking code and appending of the terminal checking code to data bits for forming a data packet.
Fig. 6 is a flowchart showing basic, non-limiting, example steps or acts performed in conjunction with an example method of forming a terminal checking code and performing error checking using a terminal checking code according to an example mode.
Fig. 7 is a flowchart showing basic, example acts performed by a terminal in conjunction with the method of Fig. 6.
Fig. 8 is a flowchart showing basic, example acts performed by a packet-receiving and error-checking station in conjunction with the method of Fig. 6.
Fig. 9 is a diagrammatic view showing use of a terminal checking code by a packet-receiving and error-checking station in conjunction with the method of Fig. 6.
Fig. 10 is a schematic view of a packet-receiving and error checking communications station in accordance with a non-limiting example embodiment, the station being capable of both constructing a joint acknowledgement word and performing error checking using a terminal checking code.
Fig. 11 is a schematic view of a packet sending terminal in accordance with a non-limiting example embodiment, the terminal being capable of both processing a joint acknowledgement word and of preparing a packet for error checking using a terminal checking code.
Fig. 12 is a diagrammatic view showing an example manner of dividing an amount of frequency spectrum into packet data channels.
Fig. 13 is a diagrammatic view depicting an example superframe comprising four plural frame periods.
Fig. 14 is a diagrammatic view showing how an acknowledgement can selectively be sent either (1) as only a first word when using only full size packet channels; or (2) as two words when using half size packet channels.
Fig. 15 is a schematic view of a packet-receiving and error checking communications station in accordance with a non-limiting example embodiment wherein compression and error correction are also employed.
Fig. 16 is a diagrammatic view showing an example format of an acknowledgement word having an error detection code included therein or appended thereto.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. That is, those skilled in the art will be able to devise various arrangements which, although not explicitly described or shown herein, embody the principles of the invention and are included within its spirit and scope. In some instances, detailed descriptions of well-known devices, circuits, and methods are omitted so as not to obscure the description of the present invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein can represent conceptual views of illustrative circuitry embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicitly shown.

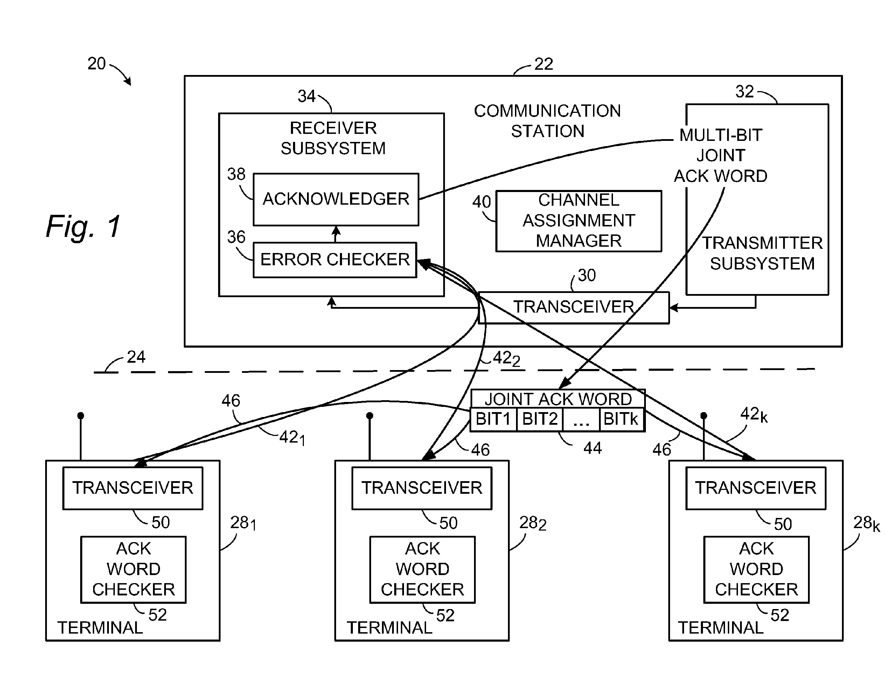

Fig. 1 illustrates in simplified form a communications system 20 comprising a first communications station 22 which communicates over an interface 24 with plural second communications stations such as terminals 28ₗ - 28ₖ. In a non-limiting example implementation in which interface 24 is an air or radio interface, the first communications station 22 can be a radio base station (also know as a base transceiver station or Node B), while the terminals 28ₗ - 28ₖ can take the form of wireless terminals or the like (also known as mobile stations, mobile terminals, user equipment units (UE), or simply "UEs"). The terminals 28ₗ - 28ₖ can be mobile stations such as mobile telephones ("cellular" telephones) and laptops with mobile termination, and thus can be, for example, portable, pocket, hand-held, computer-included, or car-mounted mobile devices which communicate voice and/or data with radio access network. Alternatively, the terminals 28ₗ - 28ₖ can be fixed wireless devices, e.g., fixed cellular devices/terminals which are part of a wireless local loop or the like. Although the ensuing description primarily refers to a wireless interface and the terminals 28ₗ - 28ₖ as being wireless terminals, it will be appreciated that the present invention can also be utilized with stations that have wired or other types of connections.

Fig. 1 further shows first communications station 22 as comprising transceiver 30 as well as a transmitting subsection 32 and a receiver subsection 34. Data and signaling destined for transmission from first communications station 22 to one or more terminals 28 are processed and preferably assembled in packet form by transmitting subsection 32 for application to transceiver 30. The transceiver 30 transmits the packets on a downlink from first communications station 22 to one or more terminals 28. Similarly, packets received by transceiver 30 on an uplink from one or more terminals 28 are applied to receiver subsection 34 for processing.

In conjunction with the processing of packets received from one or more terminals 28ₗ - 28ₖ on the uplink, receiver subsection 34 comprises an error checker 36 and an acknowledgement generator, e.g., acknowledger 38. The error checker 36 can employ any suitable manner for checking or determining error(s) in a received packet, or for detecting or determining any other irregularity for a received packet. The error checker 36 can thus employ error detection logic such as cyclic redundancy checking and/or other error correction techniques such as convolutional coding, for example. A particular error correction technique suitable for employment by error checker 36 is further described herein.

The first communications station 22 further comprises a channel assignment manager 40 configured to assign respective communication channels to each of plural terminals 28. Typically the first communications station 22 receives data packets from plural terminals 28ₗ - 28ₖ over respective plural communication channels 42ₗ - 42ⱼ. There may or may not be a one to one correspondence of channels 42 to terminals 28. Whereas for sake of simplification Fig. 1 shows each terminal 28 as using one channel, it will be appreciated that a terminal 28 may utilize more than one channel. Thus, the term "respective" is used in a broad sense that a terminal 28 sends data packets over the respective one or more channels assigned to that terminal 28.

Fig. 1 thus depicts (by arrows the channels 42ₗ- 42ₖ) the simplified situation in which first communications station 22 receives data packets from the plural terminals 28ₗ - 28ₖ on the uplink. Each of the data packets from the separate terminals 28ₗ - 28ₖ is checked by error checker 36 for errors. The acknowledger 38 is responsible for preparing a multi-bit acknowledgement word (illustrated by acknowledgement word 44 in Fig. 1) for separately acknowledging the success or failure of data packets received over plural communication channels 42 from the plural terminals 28. The acknowledgement word 44 is a "joint" or "common" acknowledgement word in the sense that one and the same acknowledgement word provides acknowledgement information for data packets received from the plural terminals 28. Yet the joint acknowledgement word 44 separately designates whether each data packet was received successfully or not since different bits of the joint acknowledgement word are respectively associated with the different channels 42 assigned to the respective terminals 28. For example, a first bit (BIT1) of the acknowledgement word 44 is associated with a first channel 42₁; a second bit (BIT2) of the acknowledgement word 44 is associated with a second channel 42₂; and so forth, up to a k^{th} bit (BITk) of acknowledgement word 44. Again it should be kept in mind that a terminal 28 may be assigned plural channels.

As shown by arrows 46 in Fig. 1, the acknowledgement word 44 is transmitted by transceiver 30 of first communications station 22 to the terminals 28₁-28ₖ. Fig. 1 also shows that each terminal 28 comprises, e.g., a terminal transceiver 50 and an acknowledgement word checker 52. The terminal transceiver 50 of each of the plural terminals 28 receives the entire acknowledgement word 44 as transmitted by transceiver 30 of first communications station 22.

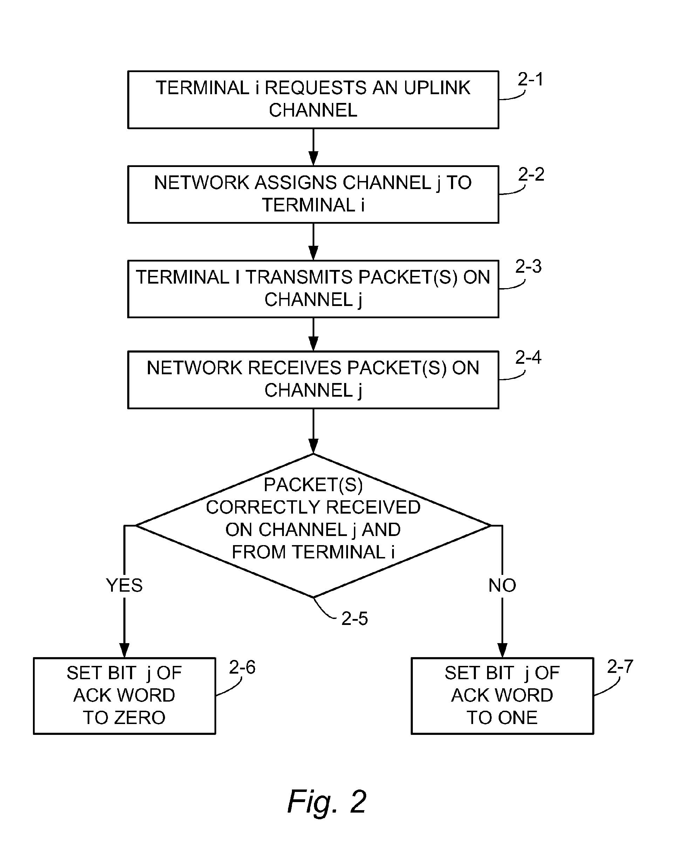

Fig. 2 illustrates basic, non-limiting, example steps or acts performed in conjunction with an example method of acknowledging data packets received by the first communications station 22 from the plural terminals 28, and of constructing an acknowledgement word such as acknowledgement word 44 of Fig. 1. The acts of Fig. 2 are performed for each of plural terminals 28, a representative one of the terminals 28 being now referred to as terminal 28ᵢ. Act 2-1 depicts terminal 28ᵢ requesting an uplink packet data channel assignment from the network. In an example implementation, the terminal 28 may transmit the request of act 2-1 on an uplink packet acknowledgement and assignment channel (PAACH) which is predetermined. In the flow chart of Fig. 2, it shall be understood that the terminal index "i" can take on different values, implying that a plurality of terminals can be making such request at different times, or even at the same time on a contention basis.

Act 2-2 shows the network assigning channel j to terminal 28ᵢ. In other words, as act 2-2, the network, e.g., first communication station 22, informs the terminal 28ᵢ of its channel assignment. The network has determined that uplink packet channel j is about to be come free at some point in the future, and assigns channel j to the requesting terminal 28ᵢ. The association between terminal 28ᵢ and channel j is then stored in a memory, e.g., by channel assignment manager 40. The definition of channel j can include one or more of: (1) radio channel frequency; (2) a group of one or more timeslots in a time division multiplex frame; (3) a duration of the channel assignment; (4) a number of packets that may be transmitted using the channel assignment; (5) one or more Code Division Multiple Access codes; (6) a modulation and coding scheme to use for transmitting a packet; and/or (7) an assignment of packet size.

As act 2-3, the terminal 28ᵢ uses it assigned channel j for transmitting a data packet(s) to first communications station 22. That is, terminal 28ᵢ transmits its packet or packets on the assigned channel at the assigned time.

Act 2-4 depicts the network receiving the data packet(s) transmitted on channel j. The network processes, e.g., decodes the received data packet(s).

As act 2-5 a packet error check is preformed at the first communications station for each data packet. In particular, as act 2-5 the error checker 36 of first communications station 22 determines whether packets were correctly received on channel j and from the correct terminal, e.g., from terminal 28ᵢ. In accordance with a result of each packet error check, an associated bit of multi-bit acknowledgement word 44 is set. It should be understood that channels may be interleaved in time or operating on different frequencies in parallel, so that the network may be receiving packets on a multiplicity of channels corresponding to different indices "j" at the same time or overlapping times.

If the packet error check of act 2-5 indicates that packets were correctly received on channel j and from terminal 28ᵢ, then as act 2-6 bit j of acknowledgement word 44 is set to zero. On the other hand, if the packet error check of act 5-2 indicates that packets were not correctly received on channel j or were not from terminal 28ᵢ, then (as act 2-7) bit j of acknowledgement word 44 is set to one. Thus, the acknowledgement word 44 has respective bits set for plural ones of the second communications stations. For example, if there are thirty two channels with j varying from 0 to 31, then a thirty-two bit acknowledgement word 44 is constructed.

If any channel were not assigned in a given time period, then the network may omit to attempt to decode packets on that channel and then sets the channel-corresponding bit to zero as at act 2-6, indicating that no error was detected. The reason for the choice of this convention, rather than setting the bit corresponding to an unallocated channel to one (indicating no correct packet was received), is to facilitate the use of an acknowledgement compression method that is optimized for coding a word containing a limited number of zeroes. Of course, the reverse bit polarity convention could equally well be used.

After all bits for the acknowledgement word 44 are set so that acknowledgement is provided for all channels, the acknowledgement word is then transmitted from first communications station 22 to the plural terminals 28. As such, each of the plural terminals receives the acknowledgement word 44. For any given terminal 28, one or more but possibly not all of the bits of the acknowledgement word 44 are pertinent for acknowledging a corresponding one or more packets transmitted by the given terminal 28.

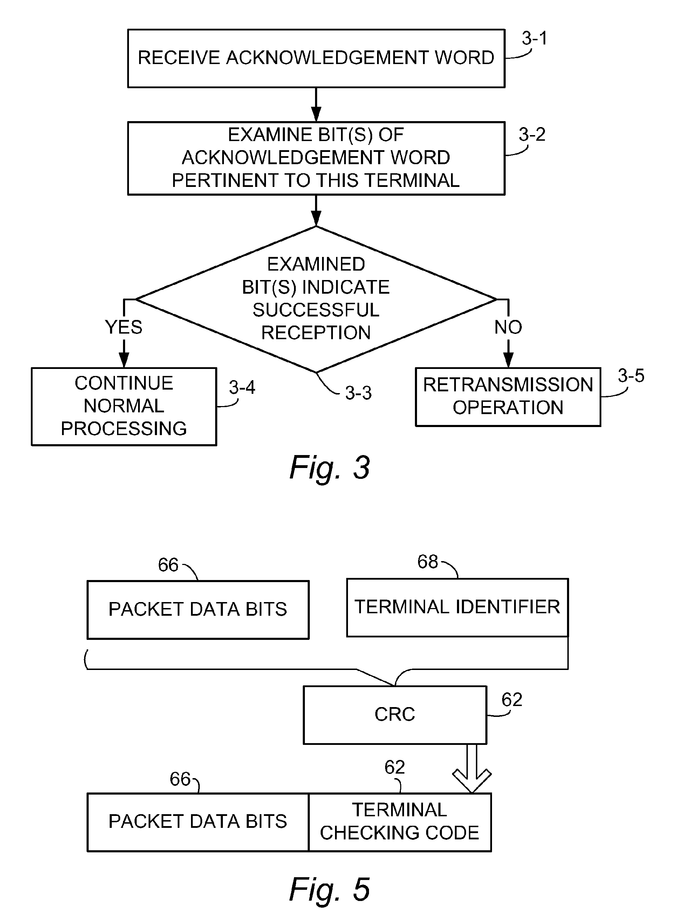

Fig. 3 shows basic, example acts performed by a representative terminal such as terminal 28 upon receiving the acknowledgement word 44 over interface 24 from first communications station 22. Act 3-1 depicts reception of the acknowledgement word 44 at an at least one of the second communication stations, e.g., at one of the terminals 28. As act 3-2, the acknowledgement word checker 52 of receiving terminal 28 examines a bit(s) of the acknowledgement word 44 corresponding to the respectively assigned channel (e.g., the channel assigned to the ack-receiving/examining terminal 28) to determine success or failure of the first communication station 22 to receive a data packet transmitted by the receiving/examining terminal 28 to the first communication station 22. If, as act 3-3, examination of the corresponding bit by acknowledgement word checker 52 indicates that the data packet from the ack-receiving/examining terminal 28 was successfully received (e.g., the bit has a zero value), then normal processing continues as indicated by act 3-4. However, if examination of the corresponding bit indicates that the data packet from the ack-receiving/examining terminal 28 was not successfully received (e.g., the bit has a one value), then acknowledgement word checker 52 prompts a retransmission of the non-received or unsuccessful data packet, e.g., a retransmission operation.

In an example implementation, upon the acknowledgement word checker 52 of the terminal 28 determining the failure of the communication station 22 to receive the data packet, the transceiver 50 of the terminal 28 is further configured to retransmit the data packet when a suitable opportunity arises (act 3-5). For example, the terminal 28 can retransmit the data packet upon receiving a request for retransmission from the communications station 22. Alternatively or additionally, the terminal 28 can retransmit the data packet upon receiving a new channel assignment from the communications station 22.

Thus, in an example embodiment, the first communcations station 22 comprises a channel assignment manager 40 configured to assign respective communication channels 42 to each of plural terminals. The communication station 22 further comprises a transceiver 30 configured to transmit channel assignments to the plural terminals 28 and to receive data packets from the plural terminals 28 on the respective communication channels. The communication station 22 further comprises a packet error checker 36 configured to perform a packet error check for the data packets received from the plural terminals 28, as well as an acknowledgement unit 38. The acknowledgement unit 38 is configured to prepare the multi-bit acknowledgement word 44 in accordance with results of the packet error check. In particular, the acknowledgement unit 38 is configured to set an associated bit of the acknowledgement word 44 whereby the acknowledgement word has respective bits set for plural ones of the terminals 28. The transceiver 30 is further configured to transmit the acknowledgement word 44 to the plural terminals 28.

In an example implementation of the acknowledgement method, the bit set in accordance with the result of the packet error check can be associated with a particular channel and packet position on the channel. Assigning a channel to a second station can include defining a channel comprising a radio frequency and a starting time slot for packet transmission, and a number of packets for which the channel assignment shall be used. The acknowledgement word typically comprises one bit for each of this number of packets on the assigned channel. The position of a bit within the group of bits in the acknowledgement word associated with the assigned channel corresponds to the position of a packet within the number of packets for which the channel is assigned

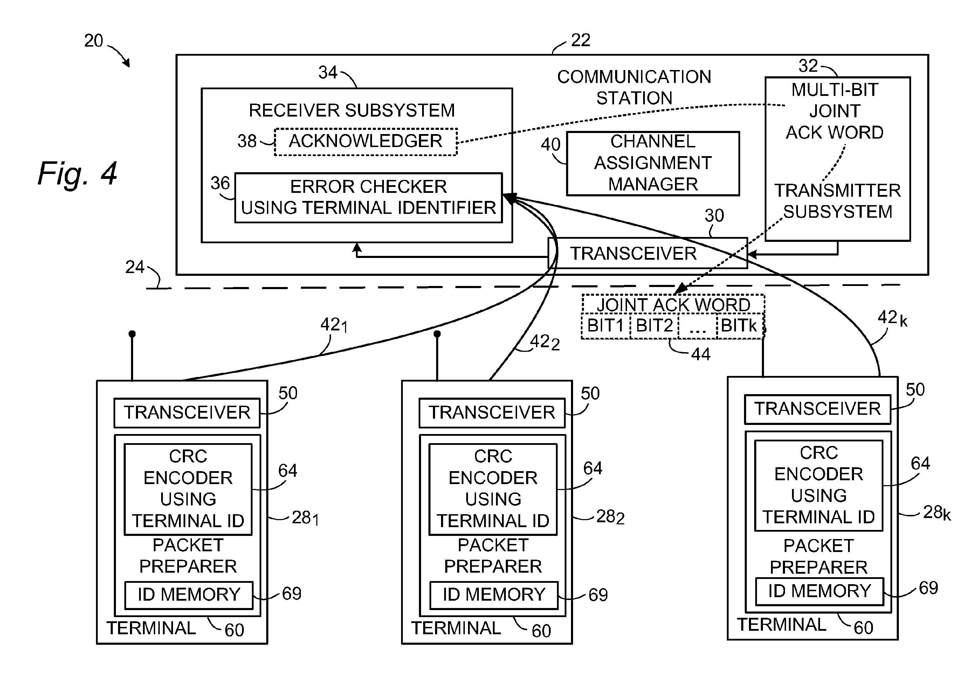

In another example implementation of the acknowledgement method, the act of performing the packet error check for a received packet at the first communication station can comprise using an identifier of the second communication station (e.g., a terminal 28) that was assigned the channel on which the packet was received. For example, the act of using the identifier of the second communication station that was assigned the channel on which the packet was received can comprise appending the identifier of the second communication station to data bits of the received packet, and then determining a cyclic redundancy check code over the identifier and the data bits of the received packet. This feature of using an identifier of the terminal 28 will be explained in more detail subsequently with reference to, e.g., Fig. 4 - Fig. 9.

Fig. 4 illustrates in simplified form a communications system 20(4) comprising a first communications station 22(4) which communicates over an interface 24 with plural second communications stations such as terminals 28(4)ₗ - 28(4)ₖ. In a non-limiting example implementation in which interface 24 is an air or radio interface, the first communications station 22(4) can be a radio base station (also know as a base transceiver station or Node B), while the terminals 28(4)ₗ - 28(4)ₖ can take the form of wired or wireless terminals or the like (either mobile or fixed, as described before in conjunction with the embodiment of Fig. 1). Like Fig. 1, Fig. 4 shows first communications station 22(4) as comprising transceiver 30 as well as a transmitting subsection 32 and a receiver subsection 34. Data and signaling destined for transmission from first communications station 22(4) to one or more terminals 28(4) are processed and preferably assembled in packet form by transmitting subsection 32 for application to transceiver 30. The transceiver 30 transmits the packets on a downlink from first communications station 22 to one or more terminals 28(4). Similarly, packets received by transceiver 30 on an uplink from one or more terminals 28(4) are applied to receiver subsection 34 for processing.

The first communications station 22(4) also includes channel assignment manager 40. Channel assignment manager 40 is configured to assign respective communication channels to each of plural terminals 28(4), much in the "respective" manner as previously described with respect to Fig. 1.

Receiver subsection 34 of first communications station 22(4) comprises error checker 36(4). The error checker 36(4) is configured to perform a packet error check for a data packet received from at least one of the plural terminals 28(4) using an anticipated terminal checking code. As illustrated by Fig. 5, the anticipated terminal checking code can comprise a cyclic redundancy check code formed over the data bits of the received data packet and the anticipated terminal identifier associated with communication channel on which the data packet is received.

Optionally, first communications station 22(4) can also comprises an acknowledger for preparing one or more acknowledgement messages which are indicative of the results of the error check performed by error checker 36(4). In an example implementation, the acknowledger can be a type such as acknowledger 38 which (as described in conjunction with the embodiment of Fig. 1) prepares a multi-bit acknowledgement word (illustrated by acknowledgement word 44 in Fig. 4) for separately acknowledging the success or failure of data packets received over plural communication channels 42 from the plural terminals 28. The optional nature of acknowledger 38 and use of the joint acknowledgement word 44 is depicted by their representation in broken lines in Fig. 4.

Fig. 4 also shows example an embodiment of terminals 28(4) capable, e.g., of facilitating the error correction method implemented by first communications station 22(4). The terminal 28(4) comprises a transceiver 50 configured to transmit a data packet on an assigned channel to a communication station such as first communications station 22(4). The communications terminal 28(4) further comprises a packet preparer 60 configured to form the data packet by appending a terminal checking code 62 to data bits of the data packet. The packet preparer 60 comprises a CRC encoder 64 which prepares the terminal checking code 62. As shown in Fig. 5, the terminal checking code 62 comprises a cyclic redundancy check code formed over the data bits 66 of the data packet and a terminal identifier 68 of terminal 28(4). The terminal 28(4) knows its terminal identifier, which can be obtained (for example) from a terminal identifier memory 69.

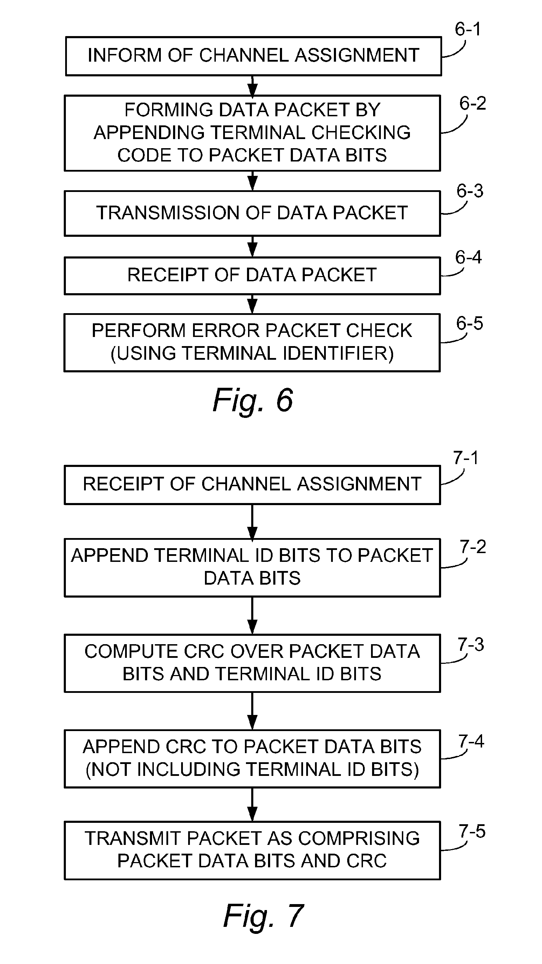

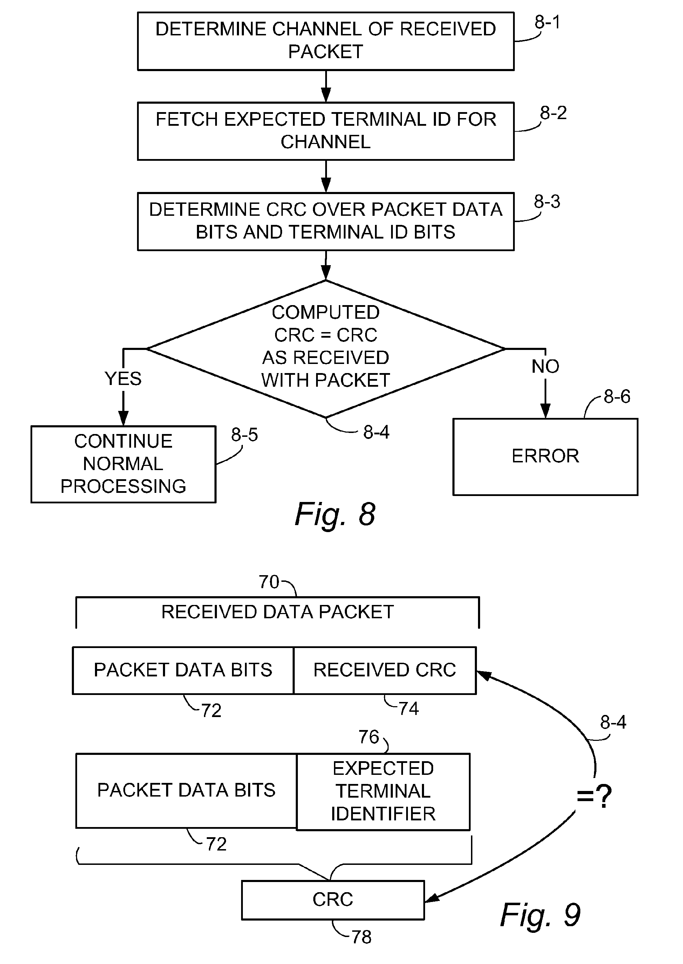

Fig. 6 illustrates basic, non-limiting, example steps or acts performed in conjunction with an example method of performing error checking using a terminal checking code such as terminal checking code 62 of Fig. 5. Fig. 7 illustrates certain example acts performed by the sending terminal 28(4) in conjunction with the method of Fig. 6; Fig. 8 illustrates certain example acts performed by the receiving and error-correcting first communications station 22(4) in conjunction with the method of Fig. 6. Thus, some of the acts depicted in Fig. 6 overlap with acts shown in Fig. 7.

Act 6-1 of the example method of Fig. 6 comprises the first communication station 22(4) informing the second communication stations 28(4) of respective channel assignments for the second communication stations 28(4). Act 6-2 comprises at least one of the second communication stations, e.g., terminal 28(4)ₗ, forming a data packet by appending a terminal checking code 62 to data bits 66 of the data packet in the manner such as that shown in Fig. 5 by way of example. The terminal checking code 62 comprises a cyclic redundancy check code formed over the data bits 66 of the data packet and the terminal identifier 68 of the terminal 28(4) which is to send the packet. The second communication station 28(4) then (as act 6-3) uses its respectively assigned channel for transmitting the data packet to first communications station 22(4). Act 6-4 shows the data packet being received at first communications station 22(4). As act 6-5 a packet error check is performed by error checker 36(4) at first communications station 22(4). As explained in more detail in conjunction with Fig. 8, the packet error check performed as act 6-5 for the data packet received from the at least one of the second communication stations uses the terminal identifier.

As indicated above, Fig. 7 illustrates certain example acts performed by the sending terminal 28(4) in conjunction with the method of Fig. 6. In particular, Fig. 7 shows as act 7-1 receipt by terminal 28(4) of its channel assignment(s). When a data packet is available for transmission to first communications station 22(4), packet preparer 60 of terminal 28(4) invokes CRC encoder 64. The CRC encoder 64, as act 7-2, appends terminal identifier bits (obtained from terminal identifier memory 69) to data bits 66 of the data packet in the manner shown in Fig. 5. Then, as act 7-3, the CRC encoder 64 computes a CRC over the data bits 66 of the data packet and over the terminal identifier 68. The CRC computed as act 7-3 becomes the terminal checking code 62 which is appended to data bits 66 of the data packet as act 7-4 (see Fig. 5). The packet (now comprising data bits 66 of the data packet and terminal checking code 62, but not terminal identifier 68) is transmitted by transceiver 50 of terminal 28(4) to first communications station 22(4) as act 7-5.

The act of performing a packet error check (such as act 6-5 of Fig. 6) at first communications station 22(4) for the packet received from a terminal 28(4) comprises further acts such as those shown by way of example in Fig. 8. Act 8-1 comprises error checker 36(4) of first communications station 22(4) determining the channel upon which the data packet was received. As shown in Fig. 9, the received data packet 70 comprises the packet data bits 72 and CRC bit(s) 74. Act 8-2 depicts error checker 36(4) fetching (e.g., from channel assignment manger 40) an expected terminal identifier 76 corresponding to the channel upon which the data packet 70 was received. As act 8-3, the error checker 36(4) determines a cyclic redundancy check code 78 over the data bits 72 of the data packet and the expected terminal identifier 76. As act 8-4, the error checker 36(4) compares the CRC bit(s) 74, e.g., the cyclic redundancy check code received in the data packet, with the cyclic redundancy check code 78 determined using the expected terminal identifier 76 to determine failure or success of reception of the data packet. If the computed cyclic redundancy check code 78 equals the received CRC bit(s) 74, then normal processing of the packet continues, as indicated by act 8-5. On the other hand, if the computed cyclic redundancy check code 78 does not equal the received CRC bit(s) 74, then as act 8-6 error checker 36(4) initiates error processing, such as (for example) inserting an indication of error for the received packet in an acknowledgement word 44 as herein before described.

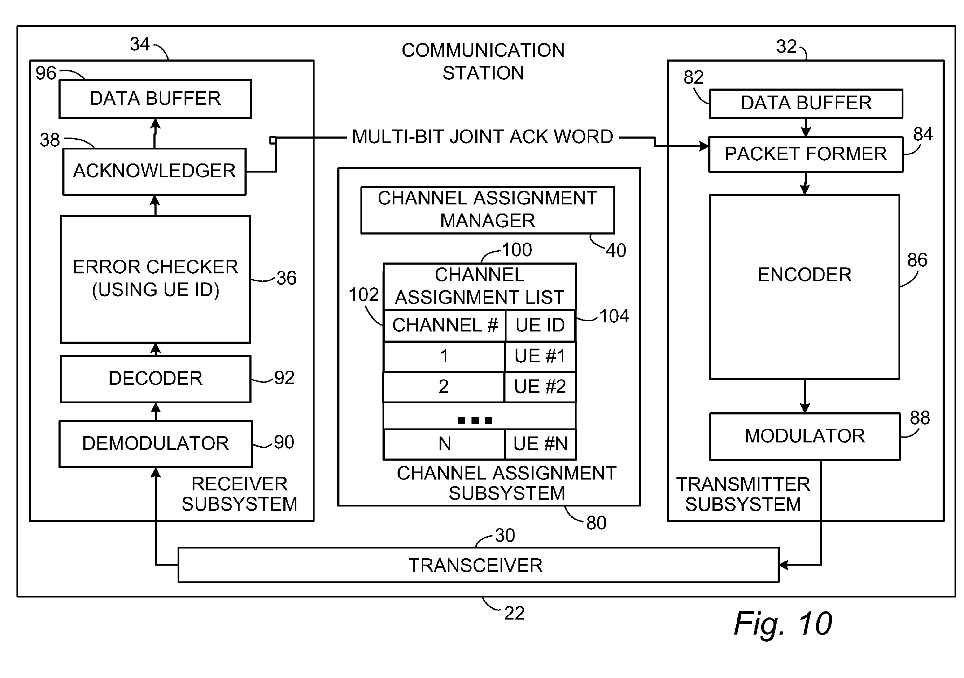

Fig. 10 shows a packet-receiving and error checking communications station 22(10) in accordance with a non-limiting example embodiment, the communications station 22(10) being capable of both constructing a joint acknowledgement word (such as acknowledgement word 44 hereinbefore described in conjunction with Fig. 1 - Fig. 3) and performing error checking using a terminal checking code (such as the manner hereinbefore described with reference to Fig. 4-Fig. 9). As understood with reference to the preceding embodiments, communications station 22(10) communications station 22(10) comprises transceiver 30; transmitting subsection 32; receiver subsection 34; and a channel assignment subsystem 80.

As indicated previously, data and signaling destined for transmission from communications station 22(10) to one or more terminals are processed and preferably assembled in packet form by transmitting subsection 32 for application to transceiver 30. To this end, transmitting subsection 32 comprises (incoming) packet data buffer 82; packet former 84; packet encoder 86; and packet modulator 88. The transceiver 30 transmits the packets on a downlink from communications station 22(10) to one or more terminals 28.

Packets received by transceiver 30 on an uplink from one or more terminals 28 are applied to receiver subsection 34 for processing. The receiver subsection 34 comprises demodulator 90; decoder 92; error checker 36(4) [configuration and operation of which has been described hereinbefore in detail]; acknowledger 38 [configuration and operation of which has been described hereinbefore in detail]; and outgoing packet data buffer 96.

In an example embodiment, channel assignment subsystem 80 comprises acknowledgement word 44 (as hereinbefore described) and a channel assignment list 100. In an example, non-limiting format, channel assignment list 100 comprises a series of records, with a first field 102 of a record designating a channel number (e.g., one of channel I through channel N) and a second field 104 of a record storing an anticipated or expected terminal identifier 76 for the channel number of the same record.

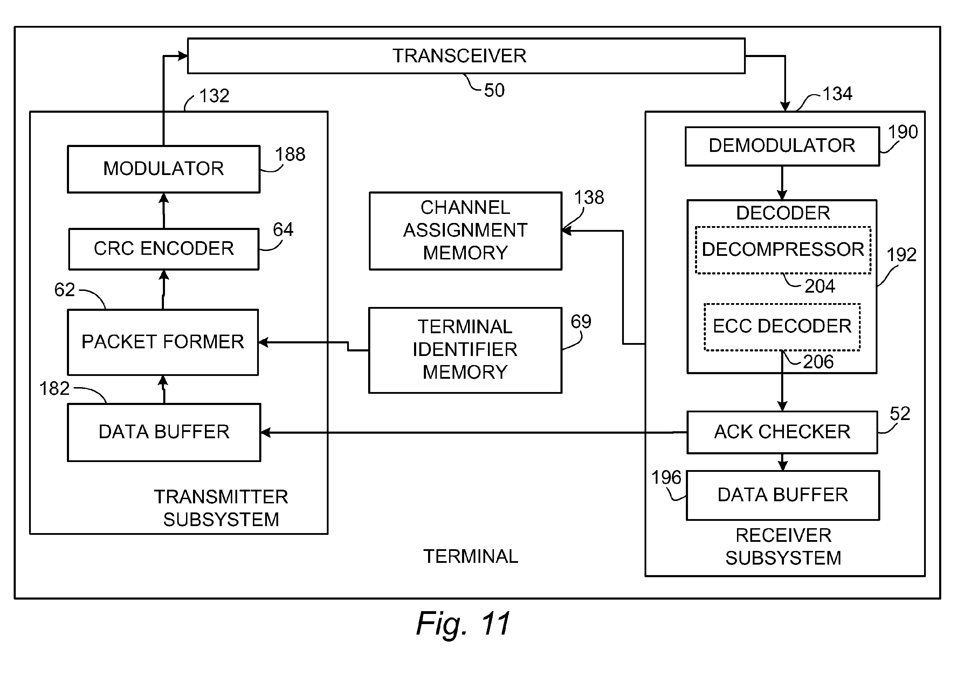

Fig. 11 shows a packet sending terminal 28(11) in accordance with a non-limiting example embodiment, the packet sending terminal 28(11) being capable of both processing a joint acknowledgement word (such as acknowledgement word 44 hereinbefore described in conjunction with Fig. 1 - Fig. 3) and of preparing a packet for error checking using a terminal checking code (such as the manner hereinbefore described with reference to Fig. 4 - Fig. 9). The terminal 28(11) of Fig. 11 comprises transceiver 50; transmitting subsection 132; receiver subsection 134; and a memory 136. The memory 136 includes, e.g., a memory location for the channel assignment received by terminal 28(11) from communications station 22(10) (e.g., channel assignment memory 138), and terminal identifier memory 69.

Data and signaling destined for transmission from terminal 28(11) to communications station 22(10) are processed and preferably assembled in packet form by transmitting subsection 132 for application to transceiver 50. Transmitting subsection 132 comprises (incoming) packet data buffer 182; packet preparer 60 including CRC encoder 64; and packet modulator 188. The transceiver 50 transmits the packets on an uplink from terminal 28(11) to communications station 22(10).

Packets received by transceiver 50 of terminal 28(11) on a downlink from communications station 22(10) are applied to receiver subsection 14 for processing. The receiver subsection 134 comprises demodulator 190; decoder 192; acknowledgement word checker 52; and outgoing packet data buffer 196.

In the communications system 20, subscriber terminals 28 such as cellular phones that have a need to send packet data to the network transmit a request for an uplink channel assignment. The network issues an uplink channel assignment that may include any or all of a channel frequency; a time slot within a repeating TDMA frame; a CDMA spreading code or scrambling code; a starting time or frame number, and a duration of the assignment, for example a number of packets. Channel assignments may also include an indication of a modulation and coding scheme to use. The modulation and coding scheme assigned to a terminal may depend on the signal strength or quality received from that subscriber terminal. The choice of modulation and coding scheme can vary the number of data bits encoded into each packet.

The uplink channel assignments are addressed to the requesting terminals 28 which then utilize the assigned channels to transmit packets for the assigned duration. The network therefore knows when and on what channel to expect packets from each of the various mobile terminals.

The terminals 28 transmit packets on the assigned packet data channels, and each packet includes some means to check if an expected terminal originated that packet. For example, a CRC check code can be included which has been computed using the mobile terminal's address or identity. Thus even if the terminal 28 does not explicitly include its address in the packet header, the receiving station can, when recomputing the CRC, re-append the address of the terminal 28 that was assigned the channel on which the packet was received, thus verifying or not that the packet originated from the expected terminal and was free of transmission errors. Verification will likely fail if the CRC was computed and appended by a different terminal than that to which the channel was assigned.

The network receives packets on the packet data channels it has assigned and checks that the packets have originated from the terminals 28 to which the respective packet data channels were assigned, and that the packets were received error free. If any packet is received with uncorrectable errors, or from an unexpected terminal address, then the packet on that packet data channel is flagged as failed.

After receiving packets on all assigned packet, data channels in some predetermined period, the network formulates an acknowledgment word 44 in which each binary bit is associated with a particular packet in a particular packet data channel assignment, and sets the bit to binary 1 for failure or binary 0 for success. The reverse convention may alternatively be used, as the entire word can be complemented at any stage as long as the convention is agreed between terminal and network, and adhered to consistently.

The network transmits the acknowledgment word 44 without addressing it to any particular terminal to indicate to all terminals 28 which packets of the packet data channel assignments were received correctly and which were not received correctly. The terminals 28 receive the acknowledgment word 44and examine the value of the bits corresponding to their own packet data channel assignments. Each terminal 28 then knows which of its transmitted packets succeeded and which failed.

One example method to check simultaneously that a packet has been correctly decoded and is from the expected terminal is to perform a cyclic redundancy check code (CRC) which is added by the terminal to every packet. The terminal 28 appends its station identity code 68 to the packet data bits 66 (act 7-2), computes a CRC code over the entire number of bits including its identity code (act 7-3), appends the CRC code to the packet data bits (act 7-4), but transmits only the packet data bits 72 plus the CRC code, omitting the terminal identity (act 7-5). At the network receiver, the packet data bits and CRC code 74 are received on channel(j) and error-correction decoded, and then the identity (i) of the terminal that was assigned channel(j) in that interval is retrieved from memory (act 8-1 and 8-2) and appended to the decoded packet data 72. The network receiver then computes the CRC 78over the retrieved terminal identity bits and the decoded packet data bits (act 8-3), and compares the computed CRC 78 with the received and decoded CRC (act 8-4). If they do not match, then either there was an error in transmission or the terminal that originated the message did not have the same identity as that retrieved by the network from its memory. Such an event can occur due to re-using frequencies multiple times in sufficiently separated geographical locations, which nevertheless causes a non-zero statistical probability of occasionally decoding a packet from an adjacent geographical area due to temporary signal propagation conditions.

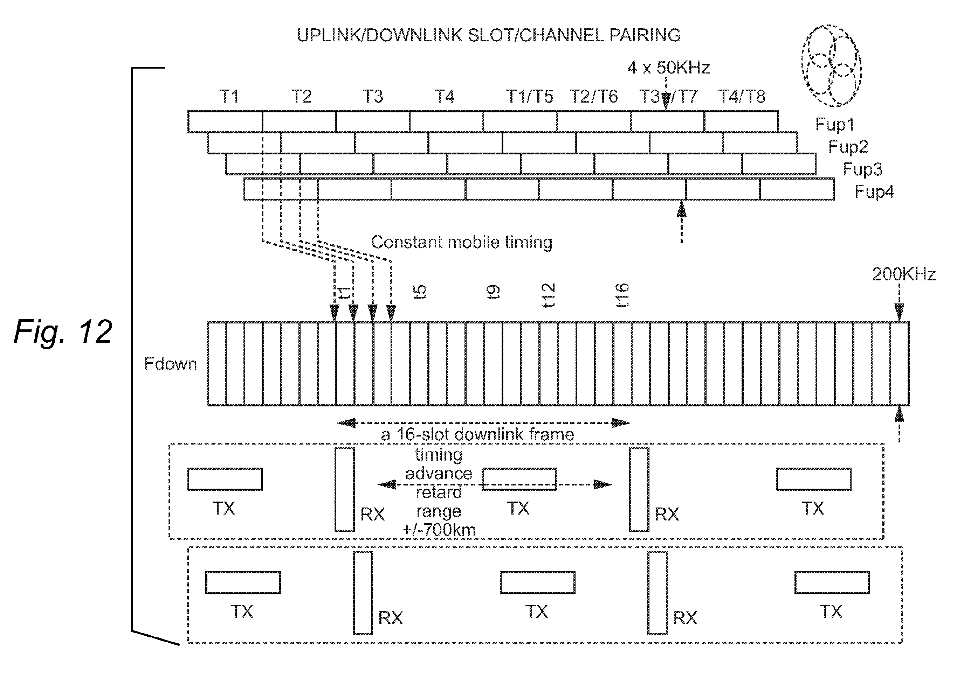

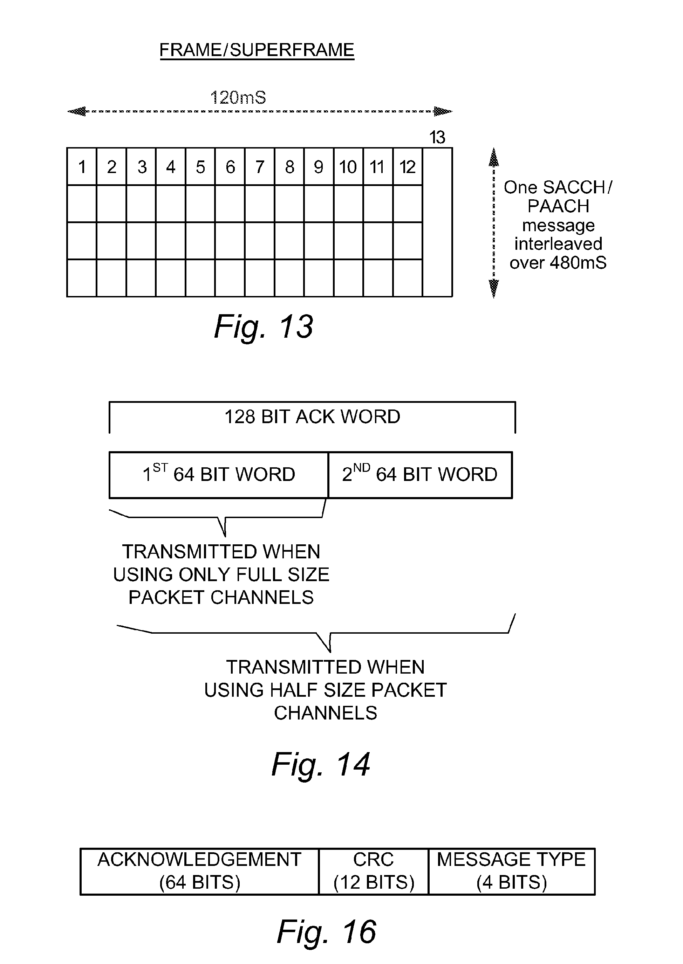

Figs. 12 and 13 show an exemplary method of dividing an amount of frequency spectrum and time into packet data channels. Fig. 12 shows that, in the network-to-terminal or downlink direction, the frequency spectrum is divided into 200KHz channels and into TDMA frames of 16 timeslots. The terminal-to-network or uplink direction has, in correspondence with each 200KHz downlink channel, four 50KHz uplink channels on which the same TDMA frame period is divided into 4 timeslots T1,T2,T3,T4. Thus there are 4 timeslots x 4 frequencies 16 timeslot/frequency combinations in an uplink frame that correspond on a l for 1 basis with the 16 timeslots x 1 frequency channel on the downlink. Uplink and downlink slots are paired such that a terminal 28 is not required to transmit and receive simultaneously even when transmitting duplex traffic such as a digital voice telephone service. Moreover the slot timing on uplink channels is staggered in steps of one downlink slot period so that each terminal experiences the same relative timing of its uplink slot to its downlink slot.

Fig. 13 illustrates a superframe structure comprising thirteen, 16-slot frames on the downlink in correspondence with thirteen, 4-slot frames on the uplink. One frame in thirteen is given to transmitting control messages including acknowledgments. The other 12 frames may be used for communicating packet data. One packet is communicated on the uplink or downlink by allocating one slot in each of these 12 frames to contain one error-correction coded packet. If all slots are allocated to one terminal, which would thereby be transmitting continuously, four interleaved packets would be transmitted in the period of 12 frames. However, each of the 4-slot x 4-frequency channel combinations could be assigned to 16 different terminals 28, each transmitting one packet interleaved over the period of 12 frames. Either way, in the period of 12 frames, 16 packets may be transmitted when the uplink is fully loaded, whether they originate from the same or different terminals.

A first full-size packet occupies the first slot in each of these twelve frames. Another packet occupies the second slot in each of the 12 frames, and so forth. The packets are divided between slots in different frames in this manner in order to spread them out in time such that bit-interleaving is more effective against fast fading. Which of these packet positions is used by a specific terminal is determined by a scheduler and communicated to the terminal by means of uplink and downlink packet data channel assignment messages.

As shown in Fig. 13, four of the 13-frame periods comprise a superframe. The 13th frames from each of the four 13-frame periods form one coded control message on the downlink. Various types of control message can be sent, including the acknowledgement word of this invention, and the aforementioned packet data channel assignment messages.

The frequency and timeslot occupancy of one packet is the definition used above when referring to a packet data channel with index j'. Over one superframe (see Fig. 13), 64 packets could be transmitted on the uplink over the four 50KHz channels. In general however, not all 64 packet positions would be filled, and some of the timeslot/frequency combinations may be used for other traffic, such as digital voice. Nevertheless, each packet position corresponds with one value of the index j and with one bit in the 64-bit acknowledgement word.

In another embodiment, 8-slot frames may be used on the uplink to transmit half-size packets, each of which is interleaved over 6 frames. In this embodiment there can be a need to acknowledge 128 half-size packets. Different assignments may be made to different terminals to transmit either half- or full-size packets. Therefore the acknowledgment word should also be capable of acknowledging a mixture of full- and half-size packets. A mapping between packet positions in the format and acknowledgment bits may be made such that, when only full-size packet channels are assigned, only the first 64 bits of the 128-bit word (see Fig. 14) need be sent.

Other considerations in choosing the mapping can be applied in addition to the above. For example, a mapping which allows the greatest run-length compression of the acknowledgment word when particular ones of the uplink carriers not assigned to packet data for any of their timeslots, or when the packet data channels are configured to use only certain ones of the 50KHz uplink frequency channels. See Table 1.

As shown in Fig. 14, a second 64-bit acknowledgement word is constructed in the case that half-size packet channels are assigned, wherein timeslots are numbered T1, T2, ...T8 and a packet occupies a corresponding timeslot of six successive S-slot frames. In this case, the acknowledgement word is computed as above for packets starting on P1, T2, P3 or T4 and the second 64-bit word is computed likewise for packet starting on P5, P6, T7 and P8. The acknowledgment word 44 (either compressed or uncompressed) is preferably but not necessarily protected with an error-detection code, e.g., a CRC.

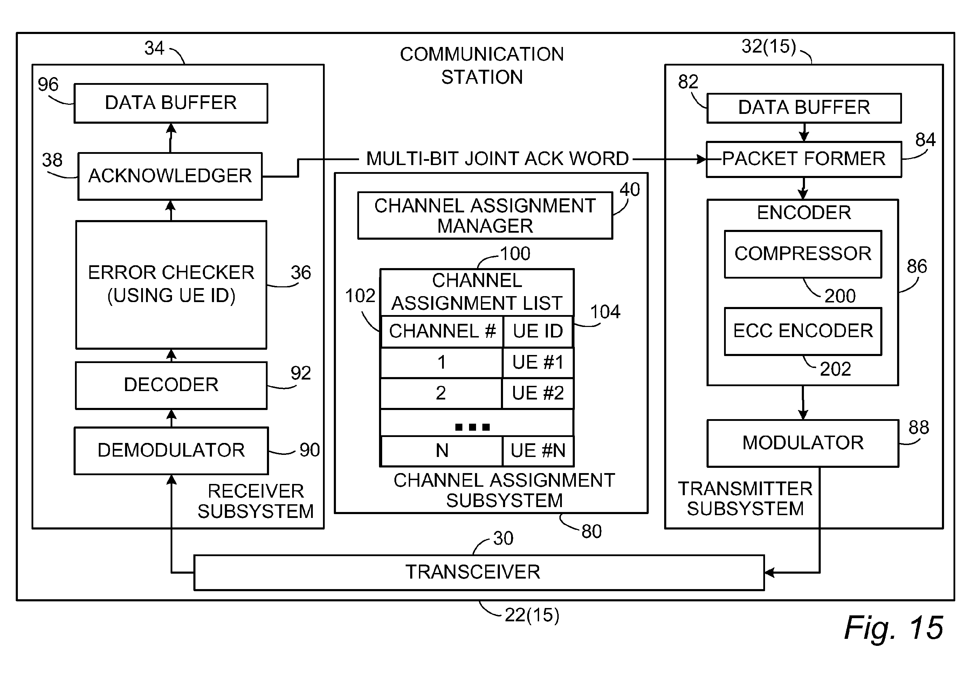

For example, Fig. 15 shows an embodiment of a first communications station 22(15) wherein the transmitting subsection 32 comprises a compressor 200 and error correction encoder 202. The compression performed by compressor 200 can employ any suitable compression algorithm, such as run-length encoding or the alternative algorithm described in US Patent Application 11/669,252, entitled DIGITAL COMPRESSION OF BINARY DATA BLOCKS. Accordingly, a terminal capable of handling the compressed and error correction encoded acknowledgement word has a corresponding error correction decoder/checker 204 and decompressor 206.

As an example of encoding of the acknowledgement word, and as shown by Fig. 16, a 12-bit CRC can be computed over the 64-bit acknowledgement word, and, together with a 4-bit message type identifier, a message of 64+12+4 80 bits is constructed. The message type identifier is used to indicate different types of message, including different types of acknowledgements, to the terminals 28. Some message types may be addressed to specific terminals, and then include the terminal address or ID either explicitly or implicitly. The message type that carries the acknowledgement message described herein is not addressed to a particular terminal 28, and the message type identifier is thus used by the terminal to indicate that it shall not look for its own address before decoding and acting on the message.

The total 80-bit message such as that shown in Fig. 16 may be error-correction coded to 240 coded bits using a rate 1/3rd error correction code, such as a convolutional code. Nevertheless, one or other terminal 28 may fail to receive the acknowledgement word error-free. The terminal 28 may then transmit a request for a packet data channel assignment for retransmission, or for a retransmission of the acknowledgment. If the network correctly received the uplink packets from the terminal requesting a retransmsision assignment, the network may transmit a conventional type of acknowledgment message specifically addressed to that terminal to indicate that retransmission is not necessary. Other clues that retransmission is not necessary may also arise, such as the terminal 28 receiving a page from an internet site that was coded in its uplink packets. Preferably such other clues that uplink packets were correctly received would be used as well as acknowledgment methods to speed up bilateral communications transactions such as web-browsing. These options belong to the higher layers of the protocol stack.

As indicated above, the error checker can detect either an error in data packet transmission or an error that the terminal that originated the message did not have the same identity as that retrieved by the network (e.g., by channel assignment manager 40 of first communications station 22) from its memory. Such an event can occur due to re-using frequencies multiple times in sufficiently separated geographical locations, which nevertheless causes a non-zero statistical probability of occasionally decoding a packet from an adjacent geographical area due to temporary signal propagation conditions.

It will be appreciated that the actions performed by various units, elements, or components herein can be performed by one or more processor(s) or controller(s). For example, any one or more of the error checkers, acknowledgers, packet preparers, packet formers, encoders, decoders, channel assignment managers, may be realized as one or more processor(s) or controller(s). As the terms "processors" or "controllers" are used herein, such terms encompass the use of dedicated hardware as well as hardware capable of executing software in association with appropriate software. When provided by a processor, the functions may be provided by a single dedicated processor, by a single shared processor, or by a plurality of individual processors, some of which may be shared or distributed. Moreover, explicit use of the term "processor" or "controller" should not be construed to refer exclusively to hardware capable of executing software, and may include, without limitation, digital signal processor (DSP) hardware, read only memory (ROM) for storing software, random access memory (RAM), and non-volatile storage.

Thus, in an example context of utilization, the technology involves a cellular communications system for communicating digital data packets between a network of cellular base stations and a plurality of mobile terminals comprises mobile terminal receivers for receiving uplink packet channel assignments from the network, mobile terminal transmitters adapted to the respectively received uplink channel assignments for transmitting data packets to the network station receivers, and at least one network station transmitter for transmitting a coded acknowledgment word, wherein each bit of the acknowledgment word is set to a first binary value if a packet was successfully received error free from a mobile terminal on its respectively assigned uplink channel or alternatively to a second binary value if a packet was received with errors or from a different mobile terminal than that to which the packet channel was assigned. Using the acknowledgment method provides an efficient way to acknowledge receipt of packets from multiple mobile terminals simultaneously.

**TABLE 1**

| EXEMPLARY MAPPING OF FREQUENCY CHANNELS AND TIMESLOTS TO PACKET INDEX j | | | |
|---|---|---|---|
| Uplink Frequency | Uplink Timeslot | SuperframeSubperiod iod | Packet index |
| Fup1 | T1 | 1 | 0 |
| Fup1 | T1 | 2 | 1 |
| Fup1 | T1 | 3 | 2 |
| Fup1 | T1 | 4 | 3 |
| Fup1 | T2 | 1 | 4 |
| Fup1 | T2 | 2 | 5 |
| Fup1 | T2 | 3 | 6 |
| Fup1 | T2 | 4 | 7 |
| Fup1 | T3 | 1 | 8 |
| Fup1 | T3 | 2 | 9 |
| Fup1 | T3 | 3 | 10 |
| Fup1 | T3 | 4 | 11 |
| Fup1 | T4 | 1 | 12 |
| Fup1 | T4 | 2 | 13 |
| Fup1 | T4 | 3 | 14 |
| Fup1 | T4 | 4 | 15 |
| Fup2 | T1 | 1 | 16 |
| Fup2 | T1 | 2 | 17 |
| Fup2 | T1 | 3 | 18 |
| Fup2 | T1 | 4 | 19 |
| Fup2 | T2 | 1 | 20 |
| Fup2 | T2 | 2 | 21 |
| Fup2 | T2 | 3 | 22 |
| Fup2 | T2 | 4 | 23 |
| Fup2 | T3 | 1 | 24 |
| Fup2 | T3 | 2 | 25 |
| Fup2 | T3 | 3 | 26 |
| Fup2 | T3 | 4 | 27 |
| Fup2 | T4 | 1 | 28 |
| Fup2 | T4 | 2 | 29 |
| Fup2 | T4 | 3 | 30 |
| Fup2 | T4 | 4 | 31 |
| - | - | - | - |
| - | - | - | - |
| Fup4 | T4 | 1 | 60 |
| Fup4 | T4 | 2 | 61 |
| Fup4 | T4 | 3 | 62 |
| Fup4 | T4 | 4 | 63 |

## Claims

1. A method of acknowledging data packets received by a first communication station (22) from plural second communication stations (28), the method comprising:
the first communication station (22) informing the second communication stations (28) of respective channel assignments for the second communication stations (28);
the second communication stations (28) using their respectively assigned channels for transmitting data packets to the first communication station (22);
performing a packet error check at the first communication station (22) for each data packet;
in accordance with a result of each packet error check, setting an associated bit of a multi-bit acknowledgement word (44) whereby the acknowledgement word (44) has respective bits set for plural ones of the second communication stations (28);
transmitting the acknowledgement word (44) from the first communication station (22) to the plural second communication stations (28), **characterized in that** the act of performing the packet error check for a received packet at the first communication station (22) comprises using an identifier (68) of the second communication station that was assigned the channel on which the packet was received.

2. The method of claim 1, wherein the bit set in accordance with the result of the packet error check is associated with a particular channel and packet position on the channel.

3. The method of claim 1, wherein the first communication station (22) is a cellular base station of a cellular network and the second communication stations (28) are wireless terminals.

4. The method of claim 1, wherein the respective channel assignments comprise an assignment of at least one of:
a radio channel frequency;
a group of one or more timeslots in a time division multiplex frame;
a duration of the channel assignment;
a number of packets that may be transmitted using the channel assignment;
one or more Code Division Multiple Access codes;
a modulation and coding scheme to use for transmitting a packet;
an assignment of packet size.

5. The method of claim 1, wherein the act of using the identifier (68) of the second communication station that was assigned the channel on which the packet was received comprises:
appending the identifier (76) of the second communication station to data bits (72) of the received packet (70);
determining a cyclic redundancy check code (78) over the identifier (76) and the data bits (72) of the received packet (70).

6. The method of claim 1, wherein the act of transmitting the acknowledgement word (44) from the first communication station (22) to the plural second communication stations (28) comprises transmitting a first portion of the acknowledgement word but only transmitting a second portion of the acknowledgement word if configuration of the channel assignments requires transmission of the second portion of the acknowledgement word.

7. The method of claim 6, further comprising choosing an association of the bits of the acknowledgement word to packet positions in the channels such that the total required acknowledgement word length is minimized for the most probably configuration of channel assignments.

8. The method of claim 1, further comprising using a compression algorithm to reduce a number of bits of the acknowledgement word (44).

9. The method of claim 1, further comprising using an error correction coding for protecting the acknowledgement word (44).

10. The method of claim 1, further comprising: receiving the acknowledgement word (44) at an at least one of the second communication stations (28);
at the at least one of the second communication stations (28), examining a bit(s) of the acknowledgement word (44) corresponding to the respectively assigned channel to determine success or failure of the first communication station (22) to receive a data packet transmitted by the at least one of the second communication stations (28) to the first communication station (22).

11. A communication station comprising:
a channel assignment manager (40) configured to assign respective communication channels to each of plural terminals (28);
a transceiver (30) configured to transmit channel assignments to the plural terminals (28) and to receive data packets from the plural terminals (28) on the respective communication channels;
a packet error checker (36) configured to perform a packet error check for the data packets received from the plural terminals (28);
an acknowledgement unit (38) configured to prepare a multi-bit acknowledgement word (44) in accordance with results of the packet error check, for each received data packet the acknowledgement unit (38) being configured to set an associated bit of the acknowledgement word (44) whereby the acknowledgement word (44) has respective bits set for plural ones of the terminals (28); and
wherein the transceiver (30) is configured to transmit the acknowledgement word (44) to the plural terminals (28), **characterized in that** the packet error checker (36), in performing the packet error check, is configured to use an identifier of the terminal that was assigned the channel on which the packet was received.

12. The apparatus of claim 11, wherein the acknowledgement unit (38) is configured to set the associated bit in association with a particular channel and packet position on the channel.

13. The apparatus of claim 11, wherein the communication station is a cellular base station of a cellular network and the terminals (28) are wireless terminals (28).

14. The apparatus of claim 11, wherein the channel assignments comprise an assignment of at least one of:
radio channel frequency;
a group of one or more timeslots in a time division multiplex frame;
a duration of the channel assignment;
a number of packets that may be transmitted using the channel assignment;
one or more Code Division Multiple Access codes;
a modulation and coding scheme to use for transmitting a packet;
an assignment of packet size.

15. The apparatus of claim 11, wherein the packet error checker (36), in performing the packet error check, is configured to use appending the identifier (76) of the terminal to data bits (72) of the received packet (70) and to determine a cyclic redundancy check code (78) over the identifier (76) and the data bits (72) of the received packet (70).

16. The apparatus of claim 11, further comprising a compressor (200) configured to reduce a number of bits of the acknowledgement word (44).

17. The apparatus of claim 11, further comprising an error correction unit (202) configured to code the acknowledgement word (44).

18. A communications terminal comprising:
a transceiver (50) configured to transmit a data packet on an assigned channel to a communication station (22);
the transceiver (50) further being configured to receive a multi-bit acknowledgement word (44) from the communication station (22), the acknowledgement word (44) including at least one bit set for indicating success or failure of the communication station to receive the data packet from the communications terminal and other bits set for at least one other communications terminal;
an acknowledgement word (44) checker (52) configured to determine, in accordance with the channel assigned to the communications terminal, which bit of the acknowledgement word (44) to examine as the at least one bit and further configured to examine the at least one bit to determine the success or the failure of the communication station to receive the data packet; and **characterized in that**
a packet former (62) is configured to form the data packet by appending a terminal checking code (62) to data bits (66) of the data packet, the terminal checking code (62) comprising a cyclic redundancy check code formed over the data bits (66) of the data packet and a terminal identifier (68).

19. The apparatus of claim 18, wherein upon the acknowledgement word checker (52) determining the failure of the communication station (22) to receive the data packet, the transceiver (50) is further configured to retransmit the data packet when a suitable opportunity arises.

20. The apparatus of claim 19, wherein the transceiver (50) is further configured to retransmit the data packet upon receiving a request for retransmission from the communications station (22).

21. The apparatus of claim 19, wherein the transceiver (50) is further configured to retransmit the data packet upon receiving a new channel assignment from the communications station (22).

## Patentansprüche

1. Verfahren zum Bestätigen von Datenpaketen, die durch eine erste Kommunikationsstation (22) von mehreren zweiten Kommunikationsstationen (28) empfangen werden, wobei das Verfahren umfasst:
die erste Kommunikationsstation (22) informiert die zweiten Kommunikationsstationen (28) über jeweilige Kanalzuweisungen für die zweiten Kommunikationsstationen (28);
die zweiten Kommunikationsstationen (28) verwenden ihre jeweils zugewiesenen Kanäle zum Senden von Datenpaketen an die erste Kommunikationsstation (22);
Durchführen einer Paketfehlerüberprüfung an der ersten Kommunikationsstation (22) für jedes Datenpaket;
in Übereinstimmung mit einem Ergebnis jeder Paketfehlerüberprüfung, Einstellen eines assoziierten Bits eines Mehrbit-Bestätigungswortes (44), wodurch das Bestätigungswort (44) jeweilige Bits aufweist, die für mehrere der zweiten Kommunikationsstationen (28) eingestellt sind;
Senden des Bestätigungsworts (44) von der ersten Kommunikationsstation (22) an die mehreren zweiten Kommunikationsstationen (28),
**dadurch gekennzeichnet, dass** der Akt zum Durchführen der Paketfehlerüberprüfung für ein empfangenes Paket an der ersten Kommunikationsstation (22) ein Verwenden eines Identifizierers (68) der zweiten Kommunikationsstation umfasst, der der Kanal zugewiesen wurde, auf dem das Paket empfangen wurde.

2. Verfahren nach Anspruch 1, wobei das Bild, das in Übereinstimmung mit dem Ergebnis der Paketfehlerüberprüfung eingestellt wird, mit einem bestimmten Kanal und Paketposition auf dem Kanal assoziiert ist.

3. Verfahren nach Anspruch 1, wobei die erste Kommunikationsstation (22) eine Zellbasisstation eines Zellnetzwerks ist und die zweiten Kommunikationsstationen (28) Drahtlosendgeräte sind.

4. Verfahren nach Anspruch 1, wobei die jeweiligen Kanalzuweisungen eine Zuweisung umfassen von wenigstens:
einer Funkkanalfrequenz;
einer Gruppe von einem oder mehreren Zeitschlitzen in einem Zeitmultiplexrahmen;
einer Dauer der Kanalzuweisung;
einer Anzahl von Paketen, die unter Verwendung der Kanalzuweisung gesendet werden können;
einen oder mehrere Codemultiplex-Codes;
ein Modulation- und Codierschema zur Verwendung zum Senden eines Pakets;
einer Zuweisung einer Paketgröße.

5. Verfahren nach Anspruch 1, wobei der Akt zum Verwenden des Identifizierers (68) der zweiten Kommunikationsstationen, der der Kanal zugewiesen wurde, auf dem das Paket empfangen wurde, umfasst:
Anfügen des Identifizierers (76) der zweiten Kommunikationsstation an Datenbits (72) des empfangenen Pakets (70);
Bestimmen eines zyklischen Redundanzüberprüfungscodes (78) über dem Identifizierer (76) und den Datenbits (72) des empfangenen Pakets (70).

6. Verfahren nach Anspruch 1, wobei der Akt zum Senden des Bestätigungsworts (44) von der ersten Kommunikationsstation (22) an die mehreren zweiten Kommunikationsstationen (28) ein Senden eines ersten Teils des Bestätigungsworts umfasst, jedoch nur Senden eines zweiten Teils des Bestätigungsworts, falls eine Konfiguration der Kanalzuweisung eine Sendung des zweiten Teils des Bestätigungsworts benötigt.

7. Verfahren nach Anspruch 6, weiterhin umfassend Auswählen einer Assoziation der Bits des Bestätigungsworts zu Paketpositionen in den Kanälen, sodass die insgesamt benötigte Bestätigungswortlänge für die wahrscheinlichste Konfiguration von Kanalzuweisungen minimiert wird.

8. Verfahren nach Anspruch 1, weiterhin umfassend Verwenden eines Kompressionsalgorithmus, um eine Anzahl von Bits des Bestätigungsworts (44) zu reduzieren.

9. Verfahren nach Anspruch 1, weiterhin umfassend Verwenden einer Fehlerkorrekturkodierung zum Schützen des Bestätigungsworts (44).

10. Verfahren nach Anspruch 1, weiterhin umfassend:
Empfangen des Bestätigungsworts (44) an wenigstens einer der zweiten Kommunikationsstationen (28);
an der wenigstens einen der zweiten Kommunikationsstationen (28), Untersuchen eines Bit(s) des Bestätigungsworts (44) entsprechend dem jeweils zugewiesenen Kanal, um einen Erfolg oder Misserfolg der ersten Kommunikationsstation (22) zum Empfangen eines Datenpakets zu bestimmen, das von der wenigstens einen der zweiten Kommunikationsstationen (28) an die erste Kommunikationsstation (22) gesendet wird.

11. Kommunikationsstation, die umfasst:
eine Kanalzuweisungs-Verwaltungseinheit (40), die eingerichtet ist zum Zuweisen jeweiliger Kommunikationskanäle an jedes von mehreren Endgeräten (28) ;
einen Sendeempfänger (30), der eingerichtet ist zum Senden von Kanalzuweisung an die mehreren Endgeräte (28) und zum Empfangen von Datenpaketen von den mehreren Endgeräten (28) auf den jeweiligen Kommunikationskanälen;
eine Paketfehler-Überprüfungseinheit (36), die eingerichtet ist zum Durchführen einer Paketfehlerüberprüfung für die von den mehreren Endgeräten (28) empfangenen Datenpakete;
eine Bestätigungseinheit (38), die eingerichtet ist zum Erstellen eines Mehrbit-Bestätigungsworts (44) in Übereinstimmung mit Ergebnissen der Paketfehlerüberprüfung, für jedes empfangene Datenpaket, wobei die Bestätigungseinheit (38) eingerichtet ist zum Einstellen eines assoziierten Bits des Bestätigungswortes (44), wodurch das Bestätigungswort (44) jeweilige Bits aufweist, die für mehrere der Endgeräte (28) eingestellt sind; und
wobei der Sendeempfänger (30) eingerichtet ist zum Senden des Bestätigungsworts (44) an die mehreren Endgeräte (28),
**dadurch gekennzeichnet, dass** die Paketfehler-Überprüfungseinheit (36), beim Durchführen der Paketfehlerüberprüfung, eingerichtet ist zum Verwenden eines Identifizierers des Endgeräts, dem der Kanal zugewiesen wurde, auf dem das Paket empfangen wurde.

12. Vorrichtung nach Anspruch 11, wobei die Bestätigungseinheit (38) eingerichtet ist zum Einstellen des assoziierten Bits in Übereinstimmung mit einem bestimmten Kanal und Paketposition auf dem Kanal.

13. Vorrichtung nach Anspruch 11, wobei die Kommunikationsstation eine Zellbasisstation eines Zellnetzwerks ist und die Endgerät (28) Drahtlosendgeräte (28) sind.

14. Vorrichtung nach Anspruch 11, wobei die Kanalzuweisungen eine Zuweisung umfassen von wenigstens:
einer Funkkanalfrequenz;
einer Gruppe von einem oder mehreren Zeitschlitzen in einem Zeitmultiplexrahmen;
einer Dauer der Kanalzuweisung;
einer Anzahl von Paketen, die unter Verwendung der Kanalzuweisung gesendet werden können;
einen oder mehrere Codemultiplex-Codes;
ein Modulations -und Codierschema zur Verwendung zum Senden eines Pakets;
einer Zuweisung einer Paketgröße.

15. Vorrichtung nach Anspruch 11, wobei die Paketfehler-Überprüfungseinheit (36), beim Durchführen der Paketfehlerüberprüfung, eingerichtet ist zum Verwenden eines Anfügens des Identifizierers (76) des Endgeräts an Datenbits (72) des empfangenen Pakets (70) und zum Bestimmen eines zyklischen Redundanzüberprüfungscodes (78) über dem Identifizierer (76) und den Datenbits (72) des empfangenen Pakets (70).

16. Vorrichtung nach Anspruch 11, die weiterhin einen Kompressor (200) umfasst, der eingerichtet ist zum Reduzieren einer Anzahl von Bits des Bestätigungsworts (44).

17. Vorrichtung nach Anspruch 11, die weiterhin eine Fehlerkorrektureinheit (202) umfasst, die eingerichtet ist zum Kodieren des Bestätigungsworts (44).

18. Kommunikationsendgerät, das umfasst:
einen Sendeempfänger (50), der eingerichtet ist zum Senden von Datenpaketen auf einem zugewiesenen Kanal an eine Kommunikationsstation (22);
wobei der Sendeempfänger (50) weiterhin eingerichtet ist zum Empfangen eines Mehrbit-Bestätigungsworts (44) von der Kommunikationsstation (22), wobei das Bestätigungswort (44) wenigstens ein Bit, das eingestellt wird zum Anzeigen eines Erfolgs oder Misserfolgs der Kommunikationsstation zum Empfangen des Datenpakets von dem Kommunikationsendgerät, und andere Bits, die für wenigstens ein anderes Kommunikationsendgerät eingestellt werden, enthält;
eine Bestätigungswort (44)-Überprüfungseinheit (52), die eingerichtet ist zum Bestimmen, in Übereinstimmung mit dem dem Kommunikationsendgerät zugewiesenen Kanal, welches Bit des Bestätigungsworts (44) als das wenigstens eine Bit zu untersuchen ist, und weiterhin eingerichtet ist zum Untersuchen des wenigstens eines Bits, um den Erfolg oder Misserfolg der Kommunikationsstation zum Empfangen des Datenpakets zu bestimmen; und
**dadurch gekennzeichnet, dass** eine Paket-Bildungseinheit (62) eingerichtet ist zum Bilden des Datenpakets durch Anfügen eines Endgerät-Überprüfungscodes (62) an Datenbits (66) des Datenpakets, das einen zyklischen Redundanzüberprüfungscode umfasst, der über den Datenbits (66) des Datenpakets und einem Endgerät Identifizierer (68) gebildet wird.

19. Vorrichtung nach Anspruch 18, wobei, wenn die Bestätigungswort-Überprüfungseinheit (52) den Misserfolg der Kommunikationsstation (22) zum Empfangen des Datenpakets bestimmt, der Sendeempfänger (50) weiterhin eingerichtet ist zum erneuten Senden des Datenpakets, wenn sich eine geeignete Gelegenheit ergibt.

20. Vorrichtung nach Anspruch 19, wobei der Sendeempfänger (50) weiterhin eingerichtet ist zum erneuten Senden des Datenpakets beim Empfangen einer Anfrage für eine erneute Sendung von der Kommunikationsstation (22).

21. Vorrichtung nach Anspruch 19, wobei der Sendeempfänger (50) weiterhin eingerichtet ist zum erneuten Senden des Datenpakets beim Empfangen einer neuen Kanalzuweisung von der Kommunikationsstation (22).

## Revendications

1. Procédé d'accusé de réception pour des paquets de données reçus par une première station de communication (22) en provenance d'une pluralité de secondes stations de communication (28), le procédé comprenant les étapes consistant à :
informer les secondes stations de communication (28) par la première station de communication (22) sur les attributions respectives de canaux aux secondes stations de communication (28) ;
utiliser par les secondes stations de communication (28) les canaux respectifs attribués pour l'émission de paquets de données vers la première station de communication (22) ;
exécuter un contrôle d'erreurs sur paquets sur la première station de communication (22) pour chaque paquet de données ;
en fonction du résultat de chaque contrôle d'erreurs sur paquets, armer un bit associé d'un mot d'accusé de réception (44) composé de bits multiples, si bien que le mot d'accusé de réception (44) comporte des bits armés respectifs pour plusieurs des secondes stations de communication (28) ;
émettre le mot d'accusé de réception (44) par la première station de communication (22) vers la pluralité de secondes stations de communication (28) ;
**caractérisé en ce que** l'étape d'exécution du contrôle d'erreurs sur paquets, sur un paquet reçu par la première station de communication (22), comprend l'étape consistant à utiliser un identificateur (68) de la seconde station de communication qui a été attribué au canal sur lequel le paquet a été reçu.

2. Procédé selon la revendication 1, dans lequel le bit armé en fonction du résultat du contrôle des erreurs sur paquets est associé à un canal particulier et à une position du paquet sur le canal.

3. Procédé selon la revendication 1, dans lequel la première station de communication (22) est une station de base cellulaire d'un réseau cellulaire et les secondes stations de communication (28) sont des terminaux sans fil.

4. Procédé selon la revendication 1, dans lequel les attributions de canaux respectifs consistent en l'attribution d'au moins un des éléments suivants :
une fréquence de canal radio ;
un groupe d'un ou plusieurs créneaux temporels dans une trame multiplexée par répartition dans le temps ;
une durée de l'attribution du canal ;
un nombre de paquets pouvant être transmis à l'aide de l'attribution de canal ;
un ou plusieurs codes d'accès multiples à répartition par code ;
un mécanisme de modulation et de codage à utiliser pour la transmission d'un paquet ;
l'attribution d'une taille de paquet.

5. Procédé selon la revendication 1, dans lequel l'étape d'utilisation d'un identificateur (68) de la seconde station de communication qui a été attribué au canal sur lequel le paquet a été reçu comprend les étapes consistant à :
concaténer l'identificateur (76) de la seconde station de communication aux bits de données (72) du paquet reçu (70) ;
déterminer un code de contrôle de redondance cyclique (78) sur l'identificateur (76) et les bits de données (72) du paquet reçu (70).

6. Procédé selon la revendication 1, dans lequel l'étape d'émission du mot d'accusé de réception (44) entre la première station de communication (22) et la pluralité de secondes stations de communication (28) comprend les étapes consistant à émettre une première partie du mot d'accusé de réception et à n'émettre une seconde partie du mot d'accusé de réception que si la configuration des attributions de canaux nécessite l'émission de la seconde partie du mot d'accusé de réception.

7. Procédé selon la revendication 6, comprenant en outre l'étape consistant à choisir une association des bits du mot d'accusé de réception aux positions des paquets sur les canaux de telle sortie que la longueur totale nécessaire du mot d'accusé de réception soit minimisée pour la configuration la plus probable des attributions de canaux.

8. Procédé selon la revendication 1, comprenant en outre l'étape consistant à utiliser un algorithme de compression pour réduire le nombre de bits du mot d'accusé de réception (44).

9. Procédé selon la revendication 1, comprenant en outre l'étape consistant à utiliser un codage de correction d'erreurs afin de protéger le mot d'accusé de réception (44).

10. Procédé selon la revendication 1, comprenant en outre les étapes consistant à :
recevoir le mot d'accusé de réception (44) sur au moins une des secondes stations de communication (28) ;
sur ladite au moins une des secondes stations de communication (28), examiner un ou plusieurs bits du mot d'accusé de réception (44) qui correspondent au canal respectif attribué afin de déterminer la réussite ou l'échec de la réception par la première station de communication (22) d'un paquet de données émis par ladite au moins une des secondes stations de communication (28) vers la première station de communication (22).

11. Station de communication comprenant :
un gestionnaire d'attribution des canaux (40) configuré pour attribuer des canaux respectifs de communication à chaque terminal parmi une pluralité de terminaux (28) ;
un émetteur-récepteur (30) configuré pour émettre des attributions de canaux vers la pluralité de terminaux (28) et pour recevoir des paquets de données provenant de la pluralité de terminaux (28) sur les canaux respectifs de communication ;
un contrôleur d'erreurs sur paquets (36) configuré pour effectuer un contrôle d'erreurs sur paquets pour les paquets de données reçus de la pluralité de terminaux (28) ;
une unité d'accusé de réception (38) configurée pour préparer un mot d'accusé de réception (44) composé de bits multiples, en fonction des résultats du contrôle d'erreurs sur paquets effectué sur chaque paquet de données reçu, l'unité d'accusé de réception (38) étant configurée pour armer un bit associé du mot d'accusé de réception (44), si bien que le mot d'accusé de réception (44) possède des bits respectifs armés pour une pluralité de terminaux (28) ; et
dans lequel l'émetteur-récepteur (30) est configuré pour émettre le mot d'accusé de réception (44) vers la pluralité de terminaux (28) ;
**caractérisé en ce que** le contrôleur d'erreurs sur paquets (36), dans l'exécution du contrôle d'erreurs sur paquets, est configuré pour utiliser un identificateur du terminal qui a été attribué au canal sur lequel le paquet a été reçu.

12. Appareil selon la revendication 11, dans lequel l'unité d'accusé de réception (38) est configurée pour armer le bit associé en association avec un canal particulier et une position particulière du paquet dans le canal.

13. Appareil selon la revendication 11, dans lequel la station de communication est une station de base cellulaire d'un réseau cellulaire et les terminaux (28) sont des terminaux sans fil (28).

14. Appareil selon la revendication 11, dans lequel les attributions de canaux consistent en l'attribution d'au moins un des éléments suivants :
une fréquence de canal radio ;
un groupe d'un ou plusieurs créneaux temporels dans une trame multiplexée par répartition dans le temps ;
une durée de l'attribution du canal ;
un nombre de paquets pouvant être transmis à l'aide de l'attribution de canal ;
un ou plusieurs codes d'accès multiples à répartition par code ;
un mécanisme de modulation et de codage à utiliser pour la transmission d'un paquet ;
l'attribution d'une taille de paquet.

15. Appareil selon la revendication 11, dans lequel le contrôleur d'erreurs sur paquets (36), dans l'exécution du contrôle d'erreurs sur paquets, est configuré pour utiliser une concaténation de l'identificateur (76) du terminal aux bits de données (72) du paquet reçu (70) et pour déterminer un code de contrôle de redondance cyclique (78) sur l'identificateur (76) et les bits de données (72) du paquet reçu (70).

16. Appareil selon la revendication 11, comprenant en outre un moyen de compression (200) configuré pour réduire le nombre de bits du mot d'accusé de réception (44).

17. Appareil selon la revendication 11, comprenant en outre une unité de correction d'erreurs (202) configurée pour coder le mot d'accusé de réception (44).

18. Terminal de communication comprenant :
un émetteur-récepteur (50) configuré pour émettre un paquet de données sur un canal attribué vers une station de communication (22) ;
l'émetteur-récepteur (50) étant en outre configuré pour recevoir de la station de communication (22) un mot d'accusé de réception (44) composé de bits multiples, le mot d'accusé de réception (44) incluant au moins un bit armé pour indiquer le succès ou l'échec de la réception du paquet de données par la station de communication en provenance du terminal de communication et d'autres bits armés pour au moins un autre terminal de communication ;
un contrôleur (52) de mot d'accusé de réception (44) configuré pour déterminer, en fonction du canal attribué au terminal de communication, quel est le bit à examiner dans le mot d'accusé de réception (44) comme étant ledit au moins un bit destiné à déterminer le succès ou l'échec de la réception du paquet de données par la station de communication ; et
**caractérisé en ce qu'**un moyen de formation de paquets (62) est configuré pour former le paquet de données en concaténant un code de contrôle du terminal (62) aux bits de données (66) du paquet de données, le code de contrôle du terminal (62) comprenant un code de contrôle de redondance cyclique formé sur les bits de données (66) du paquet de données et sur un identificateur du terminal (68).

19. Appareil selon la revendication 18, dans lequel, après que le contrôleur de mot d'accusé de réception (52) a déterminé l'échec de la réception du paquet de données par la station de communication (22), l'émetteur-récepteur (50) est en outre configuré pour ré-émettre le paquet de données lorsqu'une occasion adéquate se produit.

20. Appareil selon la revendication 19, dans lequel l'émetteur-récepteur (50) est en outre configuré pour ré-émettre le paquet de données après avoir reçu une demande de ré-émission de la station de communication (22).

21. Appareil selon la revendication 19, dans lequel l'émetteur-récepteur (50) est en outre configuré pour ré-émettre le paquet de données après réception d'une nouvelle attribution de canal en provenance de la station de communication (22).
